# EUROPÄISCHE PATENTSCHRIFT

(11) **EP 1 580 858 B1**
(45) Veröffentlichungstag und Bekanntmachung des Hinweises auf die Patenterteilung: **11.05.2011**
(21) Anmeldenummer: 05004016.1
(22) Anmeldetag: 24.02.2005
(51) Int. Cl.: H02G 3/30

(54) **Kabelhalter**
Cable holder
Support de cable

(30) Priorität: 01.03.2004 DE 102004009967; 03.08.2004 US 598273 P
(43) Veröffentlichungstag der Anmeldung: 28.09.2005
(73) Patentinhaber: Airbus Operations GmbH, 21129 Hamburg (DE)
(72) Erfinder: Lohr, Hauke, 21614 Buxtehude (DE)
(74) Vertreter: Kopf, Korbinian Paul

(56) Entgegenhaltungen:
- EP-A- 1 126 571
- FR-A- 2 730 871
- US-A- 4 244 544
- US-A- 5 106 040

## Beschreibung

Die vorliegende Erfindung betrifft die Halterung und Führung von Leitungen, Leitungsrouten, Kabelbündeln und Kabel in Flugzeugen. Insbesondere betrifft die vorliegende Erfindung einen Kabelhalter für ein Flugzeug, ein Grundelement für einen Kabelhalter für ein Flugzeug, ein Kabelhaltermodul für einen Kabelhalter für ein Flugzeug, einen Kabelhalterkit sowie ein Flugzeug mit einem entsprechenden Kabelhalter.

Im Bereich von Kabinentechnologie von Flugzeugen findet eine rasante Entwicklung der elektrischen/elektronischen Kabinensysteme, wie Beleuchtungstechnik, Kommunikation etc., statt. Dies hat zur Folge, dass immer mehr Kabinensysteme in Kabinenbauteile integriert werden müssen.

Die Kabinensysteme müssen auf den Kabinenkomponenten (Seitenverkleidung, Decken, Toiletten etc.) elektrisch verkabelt werden.

Bekannte Kabelhalter werden üblicherweise mit den entsprechenden Strukturen des Flugzeugs bzw. der Kabine verschraubt. Solche Kabelhalter werden häufig auch als Kabelschellen bezeichnet. Nachteilig weisen solche Kabelhalter in der Regel durch Schrauben- und Gewindeeinsätze ein hohes Gewicht auf sowie erfordern eine hohe Einbauhöhe. Überdies ist ihr Einsatz unflexibel, da zusätzliche Kabelbündel zusätzliche Halter und dementsprechend neue Bohrungen in den entsprechenden Strukturen des Flugzeugs erfordern. Dies bedingt einen hohen Fertigungsaufwand für Kabinenbauteile.

Überdies sind nachträgliche Änderungen arbeits- und kostenintensiv, insbesondere in Fällen, wo zusätzliche Kabelbündel zu verlegen sind. Auch ist die Montage kompliziert, da viele verlierbare Bauteile, wie Schrauben und Scheiben, verwendet werden.

Es ist eine Aufgabe der vorliegenden Erfindung, einen verbesserten Kabelhalter für Flugzeuge anzugeben.

Gemäß einem Ausführungsbeispiel der vorliegenden Erfindung, wie in Anspruch 1 angegeben, wird ein Kabelhalter für ein Flugzeug zur Verfügung gestellt, umfassend ein Grundelement und ein Kabelhaltermodul. Das Grundelement weist Mittel zur Befestigung an einer Struktur des Flugzeugs auf. Das Kabelhaltermodul ist zur Aufnahme von zumindest einer Leitung ausgebildet. Das Grundelement und das Kabelhaltermodul sind lösbar miteinander verbunden.

Auf diese Art und Weise wird vorteilhaft ein Kabelhalter beispielsweise für elektrische Leitungen angegeben, der modular aufgebaut ist. So wird beispielsweise ermöglicht, bei schon montiertem, verschraubtem oder verklebtem Grundelement zur Verlegung zusätzlicher Leitungsrouten das Kabelhaltermodul gegen ein anderes Kabelhaltermodul auszuwechseln, das zur Aufnahme weiterer Leitungen ausgebildet ist.

Gemäß einem weiteren Ausführungsbeispiel der vorliegenden Erfindung, wie in Anspruch 2 angegeben, weisen die Mittel zur Befestigung an dem Grundelement zumindest einen Zapfen auf, der zum Einführen in eine Aussparung in einer Fläche der Struktur des Flugzeugs ausgebildet ist. Der zumindest eine Zapfen weist eine Riffelung auf.

In vorteilhafter Art und Weise weist dieser Kabelhalter keine Vielzahl von Bauteilen, wie Schrauben und Scheiben, auf, die verloren werden können. Insbesondere beim Verbauen in Flugzeugen ist dies ein Vorteil, da solche verlorenen Bauteile natürlich wieder aufgefunden und entfernt werden müssen, da solche frei beweglichen Bauteile Sicherheitsrisiken darstellen können.

Gemäß einem weiteren Ausführungsbeispiel der vorliegenden Erfindung nach Anspruch 3 weist das Kabelhaltermodul zumindest eine Rastnase zum Eingriff mit dem Grundelement derart auf, dass das Kabelhaltermodul auf dem Grundelement gehaltert ist, wenn die zumindest eine Rastnase im Eingriff ist. Es kann beispielsweise auch eine Rastnase mit einem Widerhaken ausgestaltet werden. Die Rastnase kann auch als einfacher Zapfen ausgestaltet werden, um beispielsweise in Verbindung mit einer weiteren Rastnase, die zur Halterung des Kabelhaltermoduls auf dem Grundelement vorgesehen ist, lediglich ein seitliches Verschieben des Kabelhaltermoduls auf dem Grundelement zu verhindern.

Gemäß einem weiteren vorteilhaften Ausführungsbeispiel der vorliegenden Erfindung nach Anspruch 4 weist der Zapfen eine Riffelung derart auf, dass eine Benetzung mit einem Klebstoff optimiert wird. In anderen Worten gemäß dieses Ausführungsbeispiels wird ein Kabelhalter angegeben, der insbesondere zur Verklebung mit beispielsweise Kabinenbauteilen aus beispielsweise Honigwabe oder Laminat geeignet ist. Die Riffelung des Zapfens ermöglicht eine sehr gute Benetzung bzw. Verteilung des verwendeten Klebstoffes.

Weitere Ausführungsbeispiele des Kabelhalters sind in den Ansprüchen 6 und 7 angegeben.

Gemäß einem weiteren Ausführungsbeispiel der vorliegenden Erfindung, wie in Anspruch 8 angegeben, wird ein Grundelement für einen Kabelhalter für ein Flugzeug angegeben, das ein Grundelement aufweist sowie Mittel zur Befestigung des Grundelements an einer Struktur des Flugzeugs. Das Mittel ist vorteilhaft zum Einführen in eine Aussparung in einer Fläche der Struktur des Flugzeugs ausgebildet. Das Grundelement 2 ist vorzugsweise zur Verwendung mit einem Kabelhaltermodul derart ausgestaltet, dass es mit diesem lösbar verbindbar ist.

In vorteilhafter Art und Weise wird damit ein Grundelement für einen Kabelhalter angegeben, welches ohne Schrauben, d. h. ohne verlierbare Bauteile wie Schrauben und Scheiben, verbaut werden kann. Außerdem kann dieses Grundelement mit einer Vielzahl von Kabelhaltermodulen, die unterschiedlich ausgestaltet sein können, bestückt werden, wodurch eine modulare Verwendung des Grundelements ermöglicht wird. Auch ermöglicht dieses Grundelement vorteilhaft eine flexible Erweiterung, beispielsweise bei Verlegung zusätzlicher Kabelbündel, da lediglich das Kabelhaltermodul gegen ein größeres Kabelhaltermodul auszutauschen ist, wobei das Grundelement in der Struktur des Flugzeugs verbleiben kann.

Weitere vorteilhafte Ausführungsbeispiele des Grundelements ergeben sich aus den Ansprüchen 9 bis 11.

Gemäß einem weiteren Ausführungsbeispiel der vorliegenden Erfindung, wie in Anspruch 12 angegeben, wird ein Kabelhaltermodul für einen Kabelhalter für ein Flugzeug angegeben, umfassend ein Kabelhalterelement. Das Kabelhalterelement ist zur Aufnahme von zumindest einer Leitung ausgebildet, wobei das Kabelhalterelement lösbar mit einem Grundelement verbindbar ist, welches mittels Anbringung an einer Struktur des Flugzeugs aufweist.

In vorteilhafter Art und Weise kann damit das Kabelhaltermodul in modularer Art und Weise mit verschiedensten Grundelementen, die beispielsweise schon fest mit Strukturen des Flugzeugs verklebt sind, verwendet werden.

Weitere vorteilhafte Ausführungsbeispiele des Kabelhaltermoduls ergeben sich aus den Ansprüchen 13 und 14.

Gemäß einem weiteren vorteilhaften Ausführungsbeispiel der vorliegenden Erfindung, wie in Anspruch 15 angegeben, wird ein Kabelhalterkit zur Verfügung gestellt, umfassend ein Grundelement, zumindest ein erstes Kabelhaltermodul und zumindest ein zweites Kabelhaltermodul. Das erste und das zweite Kabelhaltermodul sind zur Halterung von einer unterschiedlichen Anzahl von Leitungsbündeln und/oder von Leitungsbündeln mit unterschiedlichen Durchmessern ausgebildet. In vorteilhafter Art und Weise kann damit ein Kit angeboten werden, der flexibel für verschiedenste Verkabelungsprobleme verwendet werden kann, da je nach beispielsweise der Anzahl oder Größe der zu befestigenden Leitungsbündeln oder Leitungsrouten das jeweilige Kabelhaltermodul auf ein Grundelement, das jeweils die gleiche Bauart aufweisen kann, aufgesetzt werden kann.

Weitere vorteilhafte Ausgestaltungen der Erfindung ergeben sich aus den weiteren Ansprüchen.

Mit Verweis auf die folgenden Figuren werden vorteilhafte Ausfiihrungsbeispiele der vorliegenden Erfindung beschrieben.
Fig. 1 zeigt eine dreidimensionale Ansicht eines ersten Ausführungsbeispiels eines Kabelhalters gemäß der vorliegenden Erfindung.
Fig. 2 zeigt eine dreidimensionale Ansicht des Kabelhalters von Fig. 1, wobei das Grundelement und das Kabelhaltermodul voneinander gelöst sind.
Fig. 3 zeigt eine weitere dreidimensionale Ansicht des Kabelhalters von Fig. 1.
Fig. 4 zeigt eine Schnittansicht durch den Kabelhalter von Fig. 1 entlang der Linie A - A'.
Fig. 5 zeigt eine Schnittansicht des Kabelhaltes von Fig. 3 entlang der Schnittlinie B - B'.
Fig. 6 zeigt eine dreidimensionale Ansicht eines zweiten Ausführungsbeispiels eines Kabelhalters gemäß der vorliegenden Erfindung.
Fig. 7 zeigt eine dreidimensionale Ansicht eines dritten Ausführungsbeispiels eines Kabelhalters für ein Flugzeug gemäß der vorliegenden Erfindung.

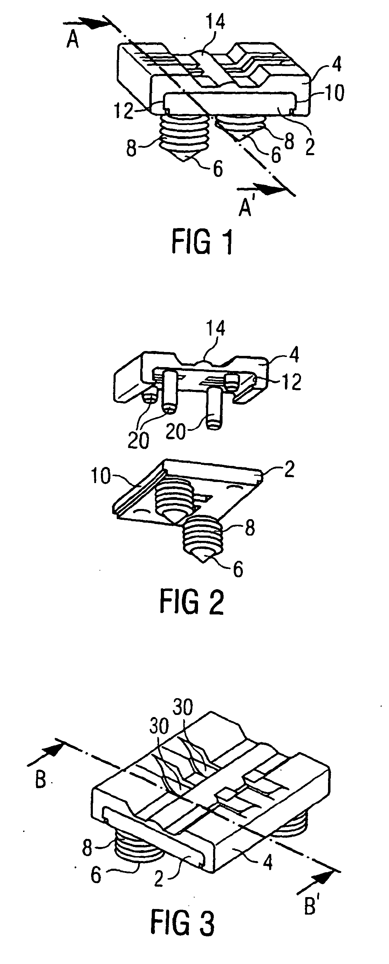

In der folgenden Beschreibung der Fig. 1 bis 7 werden für gleiche oder sich entsprechende Elemente die gleichen Bezugsziffern verwendet.

Fig. 1 zeigt eine perspektivische Ansicht eines ersten Ausführungsbeispiels eines Kabelhalters für ein Flugzeug gemäß der vorliegenden Erfindung. Bezugsziffer 2 in Fig. 1 bezeichnet ein Grundelement, das Zapfen 6 zur Befestigung an einer Struktur des Flugzeugs aufweist. Wie Fig. 1 zu entnehmen ist, weisen die Zapfen 6 jeweils eine Riffelung 6 auf. Die Riffelung der Zapfen 6 ist derart, dass sie eine Benetzung mit einem Klebstoff erleichtern und ermöglichen. Insbesondere kann der Zapfen derart mit Klebstoff bestrichen werden, dass die Rillen der Riffelung 8 mit Klebstoff gefüllt werden. Wird dann das Grundelement 2 auf einer Struktur des Flugzeugs befestigt, werden die Zapfen 6 in entsprechende d. h. entsprechend dimensionierte Aussparungen in der Struktur eingeführt. Beispielsweise ist es möglich, die Riffelung an den Enden der Riffelung flexibel auszugestalten, dass dann beim Einführen der Zapfen 6 in eine etwas kleinere Aussparung der Klebstoff fest in die Struktur des Flugzeugs eingepresst wird.

Bezugsziffer 4 in Fig. 1 bezeichnet das Kabelhaltermodul. Das Kabelhaltermodul 4 ist lösbar auf dem Grundelement 2 angeordnet. Hierfür weist das Grundelement 2 ein Profil 10 auf. Das Kabelhaltermodul weist ein entsprechendes Profil 12 auf, wobei dieses Profil 12 Nasen aufweist, die jeweils über Einschnürungen des Profils 10 greifen. In vorteilhafter Art und Weise sind dafür die Nasen des Profils 12 flexibel, beispielsweise durch eine Materialverjüngung des Materials an dieser Stelle, ausgestaltet. Dadurch kann beispielsweise das Kabelhaltermodul 4 auf ein schon montiertes Grundelement 2 in Deckung gebracht werden und durch einen festen Druck auf den Rücken des Kabelhaltermoduls 4 fest auf das Grundelement 2 aufgepresst werden. Dabei verschnappen die Nasen des Profils 12 in den Einschnürungen des Profils 10. Durch einen festen Zug kann das Kabelhaltermodul 4 dann wieder von dem Grundelement 2 gelöst werden.

Das Kabelhaltermodul 4 weist eine Ausformung 14 auf, die vorteilhaft an Kabeldurchmesser oder Durchmesser von Kabelbündeln oder an Außenformen von zu befestigenden Leitungen angepasst ist. In dem in Fig. 1 gezeigten Ausführungsbeispiel ist eine Ausformung 14 für ein Kabelbündel oder eine Kabelroute vorgesehen.

Vorzugsweise sind das Grundelement 2 und das Kabelhaltermodul 4 aus Kunststoff ausgebildet, wie beispielsweise Polyamid. Das Grundelement 2 und das Kabelhaltermodul 4 lassen sich beispielsweise mittels eines Spritzgussverfahrens einfach und kostengünstig herstellen.

Durch die Verwendung von Kunststoff für das Grundelement 2 und das Kabelhaltermodul 4 wird ein sehr geringes Gewicht des Kabelhalters ermöglicht. Auch wird durch die in Fig. 1 gezeigte Ausgestaltung des Kabelhalters eine sehr geringe Bauhöhe im Vergleich zu heute bekannten Haltern ermöglicht. Durch die lösbare Gestaltung der Verbindung zwischen dem Grundelement 2 und dem Kabelhaltermodul 4 wird ein modularer Aufbau zur Verfügung gestellt, bei dem beispielsweise eine Anordnung eines weiteren Leitungsstranges auf der gleichen Route unproblematisch ist, da lediglich das Kabelhaltermodul 4 gegen ein Kabelhaltermodul 4 auszuwechseln ist, das für größere Kabelrouten oder eine größere Anzahl von Kabelrouten ausgestaltet ist. Auch wird ein geringer Fertigungsaufwand für Kabinenbauteile, mit denen der Kabelhalter verklebbar ist, ermöglicht. Durch die Ausgestaltung der Verbindung zwischen dem Kabelhalter und der Struktur des Flugzeugs durch die Zapfen 6 mit der Riffelung 8, die beispielsweise verklebt werden kann, weist der Kabelhalter gemäß der vorliegenden Erfindung keine verlierbaren Bauteile, wie Schrauben oder Scheiben, auf.

Insbesondere ermöglicht der Kabelhalter gemäß der vorliegenden Erfindung ein Verbauen auf Kabinenbauteile, die in der Regel aus Honigwabe oder Laminat bestehen.

Wie oben angegeben, kann das Kabelhaltermodul 4 mittels Ausgestaltung der Profile 10 und 12 auf dem Grundelement 2 gehaltert sein. Es können diesbezüglich jedoch auch bekannte Snap-fit-Verbindungen oder Zapfen, die in Passungen eingesetzt werden, oder mit Widerhaken versehen werden, eingesetzt werden.

Durch den modularen Aufbau kann der Halter optimal in den Fertigungsprozess der Kabinenbauteile integriert werden. Die Trennung von Befestigung des Halters am Kabinenbauteil und der Befestigung des Kabelbündels lässt eine größtmögliche Flexibilität zu.

Im Vergleich zu bekannten Kabelhaltern, die verschraubt werden, weist der Kabelhalter gemäß der vorliegenden Erfindung ein bis zu 45 % geringeres Gewicht auf.

Fig. 2 zeigt den Kabelhalter von Fig. 1, wobei das Grundelement 2 und das Kabelhaltermodul 4 voneinander getrennt sind. Wie Fig. 2 zu entnehmen ist, weist das Kabelhaltermodul 4 zumindest eine Rastnase 20 zum Eingriff mit einer entsprechenden Aussparung in dem Grundelement 2 auf. Die Rastnasen 20 können einmal beispielsweise mit einem Widerhaken versehen werden und neben einer Verdrehsicherung oder Verschiebesicherung des Kabelhaltermoduls 4 auf dem Grundelement 2 auch zur Halterung des Kabelhaltermoduls 4 auf dem Grundelement 2 dienen. In dieser Art und Weise kann sich die Funktion der Rastnasen 20 ergänzend zu der Funktion der Profile 10 und 12 auswirken.

Allerdings können die Zapfen 20 auch als einfache zylinderförmige Zapfen ohne Widerhaken ausgebildet werden und mehr oder weniger lediglich zur Verschiebe- oder Verdrehsicherung des Grundelements 2 gegenüber dem Kabelhaltermodul 4 dienen. Die eigentliche Halterung des Kabelhaltermoduls 4 auf dem Grundelement 2 wird dann durch Zusammenwirken der Profile 10 und 12 bewirkt. Allerdings kann auch ein Vorsehen der Profile 10 und 12, der Zapfen 20 oder von Rastnasen alleine ausreichend sein.

In dem in Fig. 2 gezeigten Ausführungsbeispiel des Kabelhalters für ein Flugzeug sind zwei Zapfen 6 vorgesehen. Es ist jedoch auch möglich, lediglich einen Zapfen 6 beispielsweise bei sehr leichtgewichtigen Leitungsrouten oder auch eine größere Anzahl wie drei, vier oder fünf Zapfen 6 für schwerere Leitungsrouten oder für eine größere Anzahl von Leitungsrouten vorzusehen.

Fig. 3 zeigt eine weitere perspektivische Ansicht des Kabelhalters von Fig. 1, wobei eine Draufsicht auf das Kabelhaltermodul 4 gezeigt ist. Die Bezugsziffer 30 in Fig. 3 bezeichnet Ausformungsschlitze, durch welche nicht dargestellte Kabelbinder gezogen werden können zur Befestigung der Kabel, Kabelbündel, Leitungsbündel oder Leitungen auf dem Kabelhaltermodul 4.

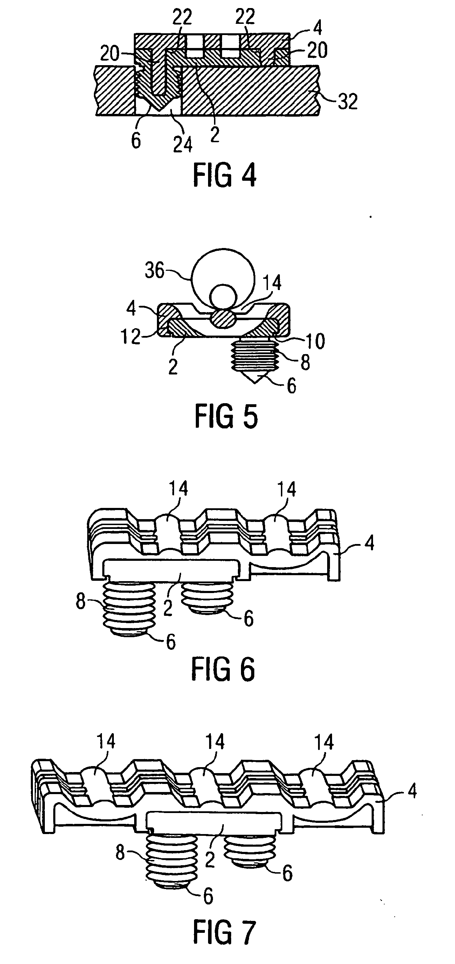

Fig. 4 zeigt eine Schnittansicht des Kabelhalters von Fig. 1 entlang der Schnittlinie A - A', wobei der Kabelhalter in einer Struktur 32 des Flugzeugs montiert dargestellt ist.

Wie Fig. 4 zu entnehmen ist, ist der Zapfen 6 in eine entsprechend dimensionierte Aussparung 24 in der Struktur 32 des Flugzeugs eingesteckt. Die Aussparung 24 kann ein etwas geringeres Ausmaß als ein Außendurchmesser des Zapfens 6 aufweisen. Vorzugsweise ist der Zapfen 6 mit der Struktur 32 des Flugzeugs verklebt.

Die Struktur 32 des Flugzeugs ist beispielsweise ein Teil eines Kabinenbauteils oder eines Kabinensystems. Die Struktur 32 kann beispielsweise aus Laminat oder Honigwabe bestehen.

Wie Fig. 4 zu entnehmen ist, weist das Kabelhaltermodul 4 Zapfen 20 auf, die jeweils eine unterschiedliche Länge aufweisen. Der in Fig. 4 rechts dargestellte Zapfen 20 weist eine Länge entsprechend in etwa einer Dicke des Grundelements 2 auf. Der in Fig. 4 linke Zapfen 20 des Kabelhaltermoduls 4 weist eine Länge auf, die wesentlich größer ist als die Dicke des Grundelements 2. Der linke Zapfen 20 des Kabelhaltermoduls 4 ist derart auf dem Kabelhaltermodul 4 angeordnet, dass er in eine entsprechende Aussparung 22 in dem Grundelement 2 eingesteckt ist, die in das Material des Zapfens 6 eingearbeitet ist. Auf diese Art und Weise wird ein größerer Berührungsbereich zwischen dem linken Zapfen 20 und der linken Aussparung 22 ermöglicht, wodurch größere Reibkräfte und damit eine größere Haltekraft zwischen dem Grundelement 2 und dem Kabelhaltermodul 4 erzielt wird, als wenn lediglich ein Zapfen 20 und eine Aussparung 22, wie auf der rechten Seite von Fig. 4 dargestellt ist, vorgesehen wären.

In anderen Worten weist das Grundelement 2 eine Aussparung 22 zum Eingriff mit einem Zapfen 20 des Kabelhaltermoduls auf, wobei die Aussparung 22 in den Zapfen 6 eingeformt ist.

Fig. 5 zeigt eine Schnittansicht des Kabelhalters von Fig. 3 entlang der Schnittlinie B - B', wobei in der Kabelaufnahmeausformung 14 ein Kabel 36 oder eine Leitungsroute 36 vorgesehen ist. Es sind Kabel mit zwei verschiedenen Durchmessern dargestellt. Der Schnittansicht von Fig. 5 lässt sich auch die Funktionsweise der Rastnasen oder der Rastnase des Profils 12 des Kabelhaltermoduls 4 entnehmen, die in die Einschnürung des Profils 10 nahe der Unterseite des Grundelements 2 eingreifen bzw. einschnappen.

Fig. 6 zeigt eine perspektivische Ansicht eines zweiten Ausführungsbeispiels eines Kabelhalters für ein Flugzeug gemäß der vorliegenden Erfindung. Im Unterschied zu dem in den Fig. 1 bis 5 dargestellten Ausführungsbeispiel weist das Kabelhaltermodul 4 nicht eine Ausformung 14 zur Aufnahme der Kabel auf, sondern zwei Ausformungen 14. Das Grundelement 2 weist den gleichen Aufbau wie das in Fig. 1 dargestellte Grundelement 2 auf.

Fig. 7 zeigt eine perspektivische Ansicht eines dritten Ausführungsbeispiels eines Kabelhalters gemäß der vorliegenden Erfindung. In dem in Fig. 7 dargestellten Ausführungsbeispiel weist das Grundelement 2 den gleichen Aufbau wie in den Fig. 1 bis 6 auf. Lediglich das Kabelhaltermodul 4 ist nun zur Aufnahme einer größeren Anzahl von Kabeln ausgestaltet. In dem in Fig. 7 dargestellten Ausführungsbeispiel sind drei Ausformungen 14 zur Aufnahme von Kabelrouten oder Kabeln vorgesehen.

Wie insbesondere aus den Fig. 6 und 7 ersichtlich, kann das gleiche Grundelement 2 mit verschiedensten Kabelhaltermodulen 4, die jeweils zur Aufnahme von größeren/kleineren oder einer größeren Anzahl von Kabeln ausgestaltet sind, verwendet werden. Dies ermöglicht eine modulare Verwendung der Grundelemente sowie der Kabelhaltermodule. Dies ermöglicht eine flexible Leitungsverlegung sowie eine einfache Änderung einer Leitungsverlegung.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Kabelhalter für ein Flugzeug, umfassend:
ein Grundelement (2); und
ein Kabelhaltermodul (4);
wobei das Grundelement Mittel (6) zur Befestigung an einer Struktur (32) des Flugzeugs aufweist;
wobei das Kabelhaltermodul (4) zur Aufnahme von zumindest einer Leitung (36) ausgebildet ist;
wobei das Grundelement (2) und das Kabelhaltermodul (4) lösbar miteinander verbunden sind; wobei das Kabelhaltermodul (4) zumindest eine Rastnase zum Eingriff mit dem Grundelement (2) derart aufweist, dass das Kabelhaltermodul (4) auf dem Grundelement (2) gehaltert ist wenn die zumindest eine Rastnase in Eingriff mit dem Grundelement (2) ist
**dadurch gekennzeichnet, dass**
das Mittel (6) zur Befestigung zumindest einen ersten Zapfen (6) aufweist, der zum Einführen in eine erste Aussparung (26) in einer Fläche der Struktur (32) des Flugzeugs ausgebildet ist;
wobei der zumindest eine erste Zapfen (6) eine Riffelung (8) aufweist.

2. Kabelhalter nach Anspruch 1,
wobei der zumindest eine Zapfen (6) eine Riffelung (8) derart aufweist, dass eine Benetzung mit einem Klebstoff optimiert wird.

3. Kabelhalter nach Anspruch 1 oder 2,
wobei das Grundelement (2) und das Kabelhaltermodul (4) im Wesentlichen aus Kunststoff bestehen.

4. Kabelhalter nach einem der Ansprüche 1 bis 3,
wobei der Kabelhalter zur Anbringung von Leitungsbündeln auf Kabinenbauteilen (32) aus Honigwabe oder Laminat ausgebildet ist.

5. Kabelhalter nach einem der Ansprüche 1 bis 4,
wobei zumindest eine zweite Aussparung in dem Grundmodul (2) zum Eingriff mit zumindest einem zweiten Zapfen (20) des Kabelhaltermoduls vorgesehen ist.

6. Grundelementmodul für einen Kabelhalter für ein Flugzeug, umfassend:
ein Grundelement (2);
Mittel (6) zur Befestigung an einer Struktur des Flugzeugs;
wobei das Mittel (6) zur Befestigung zumindest einen ersten Zapfen (6) aufweist, der zum Einrühren in eine erste Aussparung (24) in einer Fläche der Struktur (32) des Flugzeugs ausgebildet ist; und
wobei das Grundelement (2) mit einem Kabelhaltermodul (4) lösbar verbindbar ist,
**dadurch gekennzeichnet, dass**
der zumindest eine Zapfen (6) eine Riffelung (8) aufweist; und dass
das Grundelement (2) zum Eingriff mit einer Rastnase eines Kabelhaltermoduls (4) derart ausgebildet ist, dass das Kabelhaltermodul (4) auf dem Grundelement (2) gehaltert ist, wenn die Rastnase in Eingriff mit dem Grundelement ist.

7. Grundelementmodul nach Anspruch 6,
wobei der zumindest eine Zapfen (6) eine Riffelung (8) derart aufweist, dass eine Benetzung mit einem Klebstoff optimiert wird; und
wobei das Grundelement im Wesentlichen aus Kunststoff besteht.

8. Grundelementmodul nach einem der Ansprüche 6 oder 7,
wobei das Grundelement eine zweite Aussparung (22) zum Eingriff eines zweiten Zapfens der Kabelhaltermoduls (4) aufweist.

9. Flugzeug mit einem Kabelhalter nach einem der Ansprüche 1 bis 5.

## Claims

1. A cable holder for an aircraft, comprising:
a base element (2); and
a cable holder module (4);
wherein the base element has means (6) for fastening to a structure (23) of the aircraft;
wherein the cable holder module (4) is designed for receiving at least one cable (36);
wherein the base element (2) and the cable holder module (4) are detachably connected to one another; wherein the cable holder module (4) has at least one lug for engagement with the base element (2) such that the cable holder module (4) is supported on the base element (2) when the at least one lug is engaged with the base element (2)
**characterized in that**
the means (6) for fastening comprises at least one first pin (6) which is designed for being inserted into a first recess (26) in a face of the aircraft structure (32),
wherein the at least one first pin (6) has a corrugation.

2. The cable holder of claim 1,
wherein the at least one pin (6) has a corrugation (8) in such a way that a distribution with an adhesive is optimized.

3. The cable holder of claim 1 or 2,
wherein the base element (2) and the cable holder module (4) essentially consist of plastic.

4. The cable holder of one of claims 1 to 3,
wherein the cable holder is designed of a honeycomb structure or a laminate structure for attaching cable bundles on cabin components (32).

5. The cable holder of one of claims 1 to 4,
wherein at least one second recess is provided in the base module (2) for being engaged with at least one second pin (20) of the cable holder module.

6. A base element module for a cable holder for an aircraft, comprising:
a base element (2);
means (6) for fastening to a structure of the aircraft;
wherein the means (6) for fastening has at least one first pin (6), that is designed for being inserted into a first recess (24) in a face of the aircraft structure (32); and
wherein the base element (2) is detachably connected with the cable holder module (4),
**characterized in that**
the at least one pin (6) has a corrugation (8); and that
the base element (2) is designed for being engaged with a lug of a cable holder module (4) in such a way, that the cable holder module (4) is supported on the base element (2) when the lug is in engagement with the base element.

7. The base element module of claim 6,
wherein the at least one pin (6) has a corrugation (8) in such a way, that the distribution with an adhesive is optimized; and
wherein the base element essentially consists of plastic.

8. The base element module of one of claims 6 or 7,
wherein the base element has a second recess (22) for engagement with a second pin of the cable holder module (4).

9. An aircraft with a cable holder of one of claims 1 to 5.

## Revendications

1. Porte-câbles pour un avion, comprenant :
- un élément de base (2) ; et
- un module porte-câbles (4) ;
porte-câbles dans lequel
- l'élément de base présente des moyens (6) pour la fixation sur une structure (32) de l'avion;
- le module porte-câbles (4) est réalisé pour loger au moins une ligne de câble (36) ;
- l'élément de base (2) et le module porte-câbles (4) ont un assemblage mutuel amovible ; le module porte-câbles (4) présente au moins un ergot d'encliquetage pour la prise avec l'élément de base (2) de telle sorte que le module porte-câbles (4) est fixé sur l'élément de base (2), lorsque le au moins un ergot d'encliquetage est en prise avec l'élément de base (2),
**caractérisé en ce que**
- le moyen (6) pour la fixation présente au moins un premier tourillon (6), réalisé pour s'engager dans un premier évidement (26) d'une surface de la structure (32) de l'avion ;
- le au moins un premier tourillon (6) présente une cannelure (8).

2. Porte-câbles suivant la revendication 1, dans lequel le au moins un tourillon (6) présente une cannelure (8) de telle sorte qu'une imprégnation par une colle est optimisée.

3. Porte-câbles suivant l'une des revendications 1 et 2, dans lequel l'élément de base (2) et le module porte-câbles (4) se composent essentiellement de matière plastique.

4. Porte-câbles suivant l'une des revendications 1 à 3, dans lequel le porte-câbles est réalisé pour la pose de faisceaux de lignes sur des composants de cabine (32) en nid d'abeilles ou aggloméré laminé.

5. Porte-câbles suivant l'une des revendications 1 à 4, dans lequel il est prévu au moins un second évidement dans le module de base (2) pour la prise avec au moins un second tourillon (20) du module porte-câbles.

6. Module d'élément de base pour un porte-câbles destiné à un avion, comprenant
- un élément de base (2) ;
- des moyens (6) pour la fixation sur une structure de l'avion ;
- le moyen (6) pour la fixation présentant au moins un premier tourillon (6), réalisé pour s'engager dans un premier évidement (24) de la surface de la structure (32) de l'avion ; et
- l'élément de base (2) pouvant être assemblé de façon amovible avec un module porte-câbles (4),
**caractérisé en ce que**
- le au moins un tourillon (6) présente une cannelure (8) ; et **en ce que**
- l'élément de base (2) est réalisé pour la prise avec un ergot d'encliquetage d'un module porte-câbles (4) de telle sorte que le module porte-câbles (4) est fixé sur l'élément de base (2), lorsque l'ergot d'encliquetage est en prise avec l'élément de base.

7. Module d'élément de base suivant la revendication 6, dans lequel
- le au moins un tourillon (6) présente une cannelure (8) de telle sorte qu'une imprégnation par une colle est optimisée ; et
- l'élément de base se compose essentiellement de matière plastique.

8. Module d'élément de base suivant l'une des revendications 6 et 7, dans lequel l'élément de base présente un second évidement (22) pour la prise d'un second tourillon du module porte-câbles (4).

9. Avion avec un porte-câbles suivant l'une des revendications 1 à 5.
